# FASCICULE DE BREVET EUROPEEN

(11) **EP 1 760 328 B1**
(45) Date de publication et mention de la délivrance du brevet: **13.03.2013**
(21) Numéro de dépôt: 06291325.6
(22) Date de dépôt: 17.08.2006
(51) Int. Cl.: F16B 2/24, F16B 5/06

(54) **Attache élastique pour la fixation de deux pièces l'une sur l'autre**
Elastisches Verbindungselement zur Befestigung von zwei Teilen aufeinander
Elastic connecter for the fixation of two elements upon each other

(30) Priorité: 29.08.2005 FR 0508828
(43) Date de publication de la demande: 07.03.2007
(73) Titulaire: Attax, 75116 Paris (FR)
(72) Inventeur: De Azevedo, Helder, 28700 Sainville (FR); Dubost, Dominique, 78170 La Celle Saint Cloud (FR)
(74) Mandataire: Habasque, Etienne J. Jean-François

(56) Documents cités:
- DE-A1- 3 245 056
- US-A- 2 109 213
- US-A- 4 883 397

## Description

La présente invention concerne une attache élastique pour la fixation de deux pièces l'une sur l'autre.

Plus particulièrement, l'invention se rapporte à une telle attache qui présente la forme générale d'un V comportant une portion intermédiaire en forme de pince à deux branches, adaptée pour être engagée sur une première pièce et à partir d'au moins l'une des branches de laquelle s'étend au moins une aile latérale munie de moyens d'accrochage à franchissement de point dur sur un bord correspondant par exemple d'une lumière d'une deuxième pièce afin d'accrocher l'attache et donc la première pièce sur la deuxième pièce.

De telles attaches élastiques trouvent de nombreuses applications en particulier dans l'industrie automobile pour assurer la fixation de deux pièces d'équipement d'un véhicule l'une sur l'autre.

Le document US-A-2 109 213 décrit une attache pour la fixation de deux pièces l'une sur l'autre.

Le document US-A-4883397 décrit un dispositif de fixation formant pince.

Il existe en effet dans l'état de la technique, des attaches élastiques de ce type dans lesquelles les ailes latérales de l'attache sont munies de moyens formant patte externe comportant des moyens en forme de crochets élastiques à franchissement de point dur, d'accrochage de l'attache sur les bords d'une lumière par exemple d'une pièce et de moyens formant patte interne munis de moyens d'accrochage de l'autre pièce afin d'assurer la fixation des pièces l'une sur l'autre.

Dans l'état de la technique, les moyens formant patte interne de l'attache s'étendent à partir de la portion intermédiaire de celle-ci, sur une partie de la hauteur des moyens formant patte externe et définissent un passage de réception de l'autre pièce.

Cependant, les attaches de ce type présentent un certain nombre d'inconvénients, notamment au niveau de la difficulté d'introduction de l'autre pièce dans le passage défini par les moyens formant patte interne de l'attache et au niveau de la fiabilité de la fixation et en particulier de sa résistance à l'arrachement.

Par ailleurs, de telles attaches peuvent également être sources de vibration et donc de bruit.

La demanderesse a déjà proposé différentes solutions pour résoudre ces problèmes.

Le but de l'invention est de proposer des variantes d'attaches élastiques de ce type.

A cet effet, l'invention a pour objet une attache élastique selon la revendication 1.

Suivant d'autres caractéristiques de l'invention :
- les harpons sont réalisés par des découpes inclinées à partir des bords de la portion intermédiaire de celle-ci,
- les moyens à franchissement de point dur de la ou de chaque aile latérale comportent des zones de raidissement,
- la butée d'anti-recul est réalisée par découpe et déformation d'une languette à partir de l'aile latérale de l'attache,
- elle est réalisée par découpe et déformation d'un flan de tôle.

L'invention sera mieux comprise à l'aide de la description qui va suivre, donnée uniquement à titre d'exemple et faite en se référant aux dessins annexés sur lesquels :
- les figures 1, 2 et 3 représentent respectivement des vues de côté, en perspective et en position de montage d'un premier mode de réalisation d'une attache selon l'invention, et
- les figures 4, 5 et 6 représentent des vues analogues aux figures 1, 2 et 3 pour un deuxième mode de réalisation d'une attache selon l'invention.

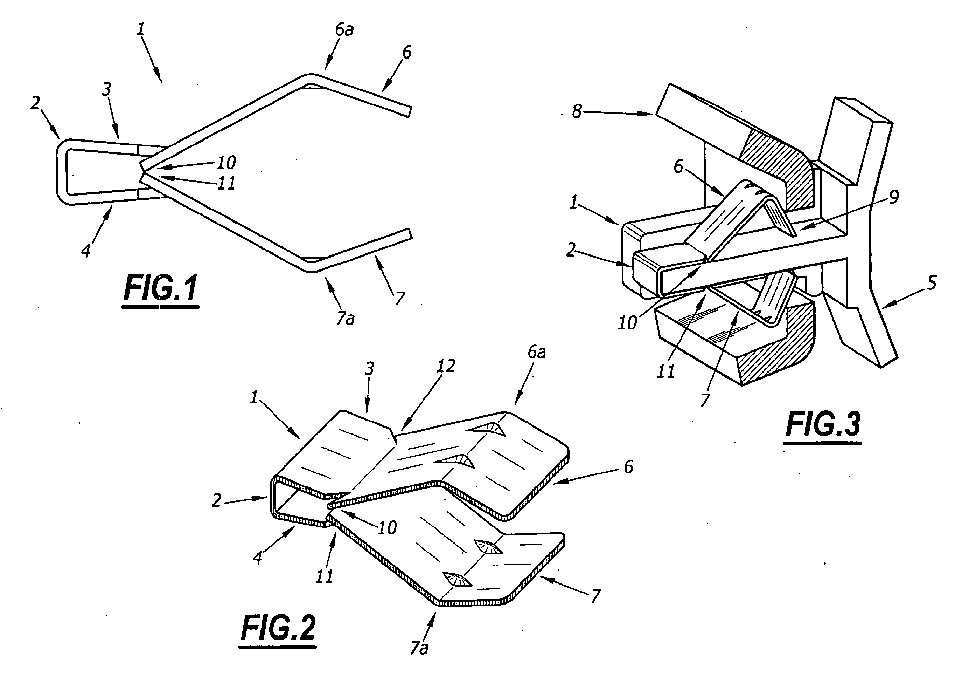

On a en effet illustré sur les figures 1 à 3, un premier exemple de réalisation d'une attache élastique selon l'invention.

Cette attache élastique est par exemple destinée à assurer la fixation de deux pièces d'équipement d'un véhicule automobile, l'une sur l'autre. Cette attache est désignée par la référence générale 1 sur ces figures et présente la forme générale d'un V comportant une portion intermédiaire en forme de pince à deux branches. Cette portion intermédiaire est désignée par la référence générale 2 et comporte deux branches 3 et 4.

Cette portion intermédiaire 2 est adaptée, comme cela est illustré sur la figure 3, pour être engagée sur une première pièce désignée par la référence générale 5, et plus particulièrement sur une partie en saillie de celle-ci.

Par ailleurs, au moins une aile latérale munie de moyens à franchissement de point dur s'étend à partir d'au moins l'une des branches 3, 4 de la portion intermédiaire 2 en forme de pince à deux branches de cette attache.

Dans l'exemple de réalisation décrit, une aile latérale respectivement 6, 7 s'étend à partir de chacune des branches 3 et 4 de la portion intermédiaire 2 de l'attache.

Bien entendu, d'autres modes de réalisation peuvent être envisagés.

Chaque aile latérale comporte alors une portion coudée 6a, 7a qui permet de définir des moyens d'accrochage à franchissement de point dur sur la seconde pièce comme cela est illustré sur la figure 3, la seconde pièce étant désignée par la référence générale 8 sur cette figure.

Dans la position illustrée sur cette figure 3, on conçoit que, une fois la première pièce 5 et l'attache 1 engagées par exemple dans une lumière 9 de la seconde pièce 8, les moyens à franchissement de point dur des ailes latérales 6 et 7 de l'attache, permettent d'éviter tout retrait de celle-ci afin de fiabiliser la fixation des pièces l'une sur l'autre.

En fait, et comme cela est illustré sur ces figures, cette attache comporte au niveau de la zone de jonction de la ou de chaque aile latérale 6, 7, et de la branche correspondante 3, 4 de la portion intermédiaire 2 de l'attache, des découpes inclinées pour définir, dans le prolongement de la ou de chaque aile latérale de l'attache et en direction de la portion intermédiaire 2 de celle-ci, des harpons de blocage de la portion intermédiaire de l'attache sur la première pièce afin de fiabiliser son maintien en position sur celle-ci.

Ces harpons sont par exemple désignés par les références générales 10, 11 et 12 sur ces figures. Dans l'exemple illustré où l'attache comporte une aile latérale s'étendant à partir de chaque branche de la portion intermédiaire de celle-ci, quatre harpons sont ainsi prévus. Bien entendu, d'autres modes de réalisation peuvent être envisagés, ces harpons pouvant par exemple être prévus non pas sur les bords de la portion intermédiaire mais directement découpés dans celle-ci.

On conçoit alors que dans ce cas, ces harpons qui s'étendent dans le prolongement de l'aile, permettent d'améliorer le blocage en position de l'attache sur la première pièce et donc la fixation de cette première pièce sur la seconde pièce.

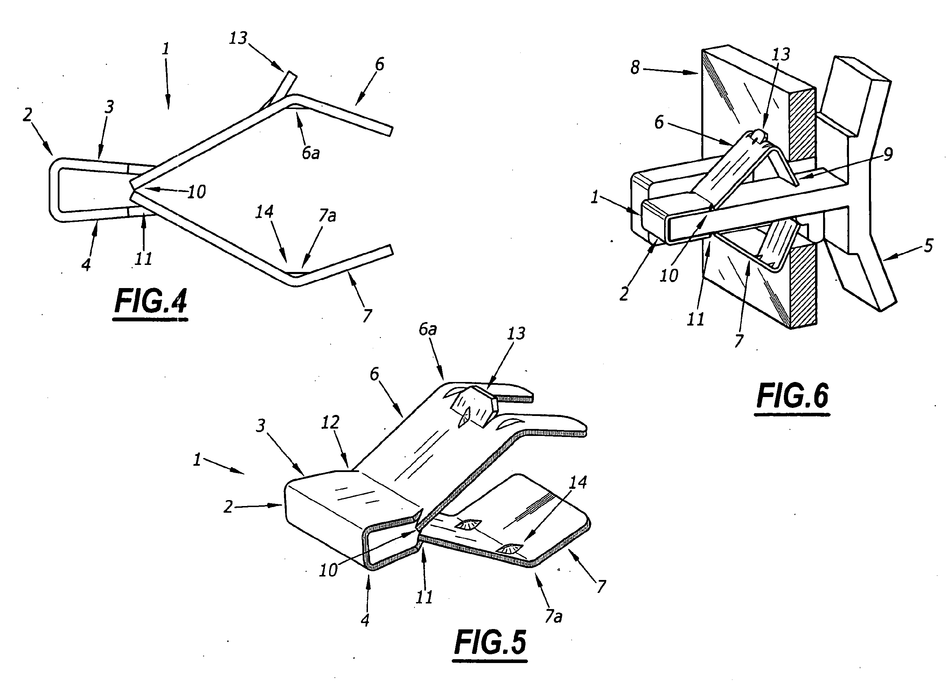

On a illustré sur les figures 4, 5 et 6, une variante de réalisation de cette attache.

Sur ces figures, des numéros de référence identiques désignent des pièces identiques ou analogues à celles illustrées sur les figures 1 à 3.

C'est ainsi que l'on reconnaît sur ces figures 4, 5 et 6, l'attache 1, la portion intermédiaire 2 de celle-ci, les branches 3 et 4, les ailes latérales 6 et 7, les harpons 10, 11 et 12, de même que la première pièce 5, la deuxième pièce 8 et sa lumière 9.

Dans ce mode de réalisation, les ailes latérales 6 et 7 de l'attache comporte également, par exemple au niveau de leur portion coudée 6a, 7a, des butées d'anti-recul dont l'une est désignée par la référence générale 13, destinées à venir en appui contre une surface de butée complémentaire de la seconde pièce 8 pour, comme cela est illustré sur la figure 6, en cas de tentative d'arrachement de la première pièce, améliorer la résistance à cet arrachement.

En fait et comme cela est illustré, ces butées d'anti-recul peuvent se présenter sous la forme de languettes découpées et déformées à partir des ailes latérales 6, 7 de l'attache.

Enfin, on notera que ces ailes latérales peuvent également comporter, par exemple au niveau des moyens à franchissement de point dur c'est-à-dire de la portion coudée de ces ailes latérales, des zones de raidissement par exemple 14, obtenues par exemple par emboutissage ou autre déformation de celles-ci.

Bien entendu, d'autres modes de réalisation encore peuvent être envisagés.

Ainsi par exemple, on a illustré une attache comportant des ailes latérales symétriques à partir des branches de la portion intermédiaire de celle-ci, mais d'autres modes de réalisation par exemple à une seule aile latérale à partir d'une seule branche de la portion intermédiaire de l'attache, peuvent également être envisagés.

De même des nombres différents de harpons, de butées d'anti-recul, de zones de raidissement, etc. peuvent être envisagés.

Une telle attache peut alors être réalisée par exemple par découpe et déformation d'un flan de tôle.

## Revendications

1. Attache élastique pour la fixation de deux pièces (5, 8) l'une sur l'autre, présentant la forme générale d'un V comportant une portion intermédiaire (2) en forme de pince à deux branches (3, 4), adaptée pour être engagée sur une première pièce (5) et à partir d'au moins l'une des branches de laquelle s'étend au moins une aile latérale (6, 7) munie de moyens d'accrochage à franchissement de point dur sur un bord correspondant de la seconde pièce (8) afin d'accrocher l'attache et donc la première pièce sur cette seconde pièce, l'attache élastique comportant au niveau de la zone de jonction de la ou de chaque aile latérale (6, 7) et de la branche correspondante (3, 4) de la portion intermédiaire, au moins une découpe en forme de harpon (10, 11, 12) s'étendant dans le prolongement de l'aile correspondante (6, 7) et en direction de la portion intermédiaire, pour bloquer la portion intermédiaire de l'attache sur la première pièce, **caractérisée en ce qu'**elle comporte des ailes latérales symétriques (6, 7) à partir des branches (3, 4) de la portion intermédiaire (2) de celle-ci, chaque aile latérale (6, 7) de l'attache comportant au moins une butée d'anti-recul (13) destinée à venir en appui contre une surface de butée complémentaire de la seconde pièce (8) pour améliorer la résistance de l'attache à l'arrachement.

2. Attache élastique selon la revendication 1, **caractérisée en ce que** les harpons (10, 11, 12) sont réalisés par des découpes inclinées à partir des bords de la portion intermédiaire de celle-ci.

3. Attache élastique selon l'une quelconque des revendications précédentes, **caractérisée en ce que** les moyens à franchissement de point dur (6a, 7a) de la ou de chaque aile latérale comportent des zones de raidissement (14).

4. Attache élastique selon l'une quelconque des revendications précédentes, **caractérisée en ce que** la butée d'anti-recul (13) est réalisée par découpe et déformation d'une languette à partir de l'aile latérale (6, 7) de l'attache.

5. Attache élastique selon l'une quelconque des revendications précédentes, **caractérisée en ce qu'**elle est réalisée par découpe et déformation d'un flan de tôle.

## Claims

1. A resilient fastener for fixing two parts (5, 8) onto each other, having the general shape of a V including an intermediate portion (2) in the shape of a pincer having two limbs (3, 4), and adapted to engage a first part (5) and from at least one of the limbs of which extends at least one lateral wing (6, 7) equipped with means, passing an over-centre position, for fastening onto a corresponding edge of the second part (8) in order to attach the fastener, and therefore the first part, to the second part, the resilient fastener comprising, at the junction zone of the or each lateral wing (6, 7) and the corresponding limb (3, 4) of the intermediate portion, at least one cut-away portion in the shape of a barb (10, 11, 12) extending in prolongation of the corresponding wing (6, 7) and in the direction of the intermediate portion, in order to lock the intermediate portion of the fastener on the first part, **characterized in that** it includes symmetrical lateral wings (6, 7) starting from the limbs (3, 4) of the intermediate portion (2) thereof, each lateral wing (6, 7) of the fastener including at least one anti-recoil stop (13) intended to bear against a complementary abutment surface of the second part (8) in order to improve the resistance of the fastener to tearing off.

2. A resilient fastener according to claim 1, **characterized in that** the barbs (10, 11, 12) are produced by inclined cut-away portions starting from the edges of the intermediate portion thereof.

3. A resilient fastener according to any one of preceding claims, **characterized in that** the means (6a, 7a), passing an over-centre position, of the or each lateral wing include stiffening zones (14).

4. A resilient fastener according to any one of preceding claims, **characterized in that** the anti-recoil stop (13) is produced by cutting out and deformation of a tongue from the lateral wing (6, 7) of the fastener.

5. A resilient fastener according to any one of preceding claims, **characterized in that** it is produced by cutting out and deformation of a sheet-metal blank.

## Patentansprüche

1. Elastisches Verbindungselement zur Befestigung von zwei Teilen aufeinander, aufweisend eine V-förmige Grundform, aufweisend einen Zwischenabschnitt (2) in Form einer Klemme mit zwei Armen (3, 4), welche angepasst ist, um mit einem ersten Teil (5) in Eingriff zu sein, und ausgehend von mindestens einem der Arme von welcher sich mindestens ein lateraler Flügel (6, 7) erstreckt, welcher mit Befestigungsmitteln zum Überwinden einer harten Stelle auf einem Rand entsprechend des zweiten Stückes (8) ausgestattet ist, um das Verbindungselement und somit das erste Stück auf dem zweiten Stück (8) zu befestigen, wobei das elastische Verbindungselement in Bezug zu der Verbindungstelle des oder jeden lateralen Flügels (6, 7) und dem entsprechenden Arm (3, 4) des Zwischenabschnitts mindestens einen Ausschnitt in Form eines Greifers (10, 11, 12) aufweist, welcher sich in Verlängerung des entsprechenden Flügels (6, 7) und in Richtung des Zwischenabschnitts erstreckt, um den Zwischenabschnitt in Verbindung mit dem ersten Stück festzuklemmen, **gekennzeichnet dadurch, dass** es symmetrische laterale Flügel (6, 7) ausgehend von den Armen (3, 4) des Zwischenabschnittes (2) des Verbindungselementes aufweist, wobei jeder laterale Flügel (6, 7) des Verbindungselementes mindestens einen Anti-Rücklauf-Stopper (13) aufweist, welcher dazu bestimmt ist, an einer ergänzenden Auflagefläche des zweiten Teils (8) anzuliegen, um den Widerstand des Verbindungselements bei der Trennung zu verbessern.

2. Elastisches Verbindungselement gemäß Anspruch 1, **gekennzeichnet dadurch, dass** die Greifer (10, 11, 12) durch schräge Ausschnitte an den Rändern des Zwischenabschnittes des Verbindungselements realisiert werden.

3. Elastisches Verbindungselement gemäß irgendeinem der vorhergehenden Ansprüche, **gekennzeichnet dadurch, dass** die Mittel zum Überwinden der harten Stelle (6a, 7a) des oder jeden lateralen Flügels Versteifungszonen (14) aufweisen.

4. Elastisches Verbindungselement gemäß irgendeinem der vorhergehenden Ansprüche, **gekennzeichnet dadurch, dass** der Anti-Rücklauf-Stopper (13) realisiert wird durch Zuschneiden und Verformen einer Zunge am lateralen Flügel (6, 7) des Verbindungselementes.

5. Elastisches Verbindungselement gemäß irgendeinem der vorhergehenden Ansprüche, **gekennzeichnet dadurch, dass** das Verbindungselement gefertigt wird durch Zuschneiden und Verformen eines Blechstückes.
